# EUROPÄISCHE PATENTSCHRIFT

(11) **EP 2 177 995 B1**
(45) Veröffentlichungstag und Bekanntmachung des Hinweises auf die Patenterteilung: **20.05.2015**
(21) Anmeldenummer: 09012914.9
(22) Anmeldetag: 13.10.2009
(51) Int. Cl.: G06F 12/02

(54) **Speicherverwaltung in einem portablen Datenträger**
Storage management in a portable data storage medium
Gestion de mémoire dans un support de données portable

(30) Priorität: 14.10.2008 DE 102008051576
(43) Veröffentlichungstag der Anmeldung: 21.04.2010
(73) Patentinhaber: Giesecke & Devrient GmbH, 81677 München (DE)
(72) Erfinder: Kramposthuber, Georg, 80639 München (DE)

(56) Entgegenhaltungen:
- WO-A1-95/12165
- WO-A1-2005/066791
- WO-A1-2008/017204
- DE-A1- 10 249 597
- US-A1- 2006 059 453

## Beschreibung

Die vorliegende Erfindung betrifft ein Verfahren zur Speicherverwaltung eines volatilen Speichers in einem portablen Datenträger sowie einen portablen Datenträger mit einer derartigen Speicherverwaltung.

Portable Datenträger, z. B. Chipkarten, Mobilfunkkarten oder dergleichen, besitzen bauartbedingt lediglich geringe Speicherressourcen, insbesondere geringe volatile Speicherressourcen, z. B. in Form eines volatilen RAM-Arbeitsspeichers. Diese volatilen Speicherressourcen werden von einer Speicherverwaltung des Datenträgers den jeweiligen nebenläufig ausgeführten Prozessen zugeteilt. Hierbei wird der während der Laufzeit von einem Prozess angeforderte Freispeicher in dem volatilen Speicher möglichst zusammenhängend bereitgestellt und von einem Prozess nicht mehr benötigter zugeteilter Speicher wird wieder freigegeben, um anschließend anderen Prozessen erneut als Freispeicher zur Verfügung zu stehen. Insofern konkurrieren die nebenläufigen Prozesse um den begrenzten Freispeicher im volatilen Speicher.

Bei einer dynamischen Speicherverwaltung des volatilen Speichers wird regelmäßig oder bei Bedarf eine automatische Speicherbereinigung ("Garbage Collection") durchgeführt, bei der in einem ersten Schritt diejenigen Speicheranteile im volatilen Speicher identifiziert und freigegeben werden, die von den betreffenden Prozessen nicht mehr benötigt werden. Das kontinuierliche Zuteilen und Freigeben von Freispeicher ist mit einer fortschreitenden Fragmentierung des volatilen Speichers verbunden. Dieser Fragmentierung wird durch eine Kompaktierung im Rahmen eines zweiten Schrittes der Speicherbereinigung begegnet, in welchem zugeteilte Speicheranteile des volatilen Speichers derart verschoben und neu angeordnet werden, dass möglichst große zusammenhängende Speicheranteile von zuteilbarem Freispeicher entstehen. Dadurch wird es notwendig, etwaige Referenzen auf verschobene Speicheranteile an die neu eingenommenen Speicherpositionen anzupassen. Diese beiden mit der automatischen Speicherbereinigung verbundenen Schritte können einerseits sehr zeitintensiv sein. Da der Umfang der Speicherbereinigung unter anderem von der Größe und dem Fragmentierungsgrad des volatilen Speichers abhängt, ist in der Regel andererseits weder der Zeitpunkt noch die Zeitdauer der Speicherbereinigung vorhersagbar. Eine solche Speicherbereinigung, die insbesondere aufgrund der begrenzten volatilen Speicherressourcen im Zusammenhang mit portablen Datenträgern häufig notwendig ist, führt zu unerwünschten Unterbrechungen in der Prozessabarbeitung und zu einer insgesamt nicht ausreichend effizienten Speicherverwaltung.

Die EP 1297 423 B1 beschreibt in diesem Zusammenhang eine so genannte generationsbasierte Speicherbereinigung. Diese stützt sich auf die Beobachtung, dass ein erheblicher Anteil zugeteilter Speicherressourcen bereits nach sehr kurzer Zeit schon nicht mehr benötigt wird. Dementsprechend werden während der Speicherbereinigung vorzugsweise lediglich die zuletzt zugeteilten Speicheranteile betrachtet. Nur in größeren zeitlichen Abständen werden sämtliche zugeteilten Speicheranteile daraufhin getestet, ob sie noch benötigt werden, wodurch der Aufwand für die Speicherbereinigung verringert wird.

Eine in der US 6,175,900 B1 offenbarte Speicherverwaltung verwendet eine hierarchisch aufgebaute Bitmap-Struktur, um den Zuteilungszustand einzelner Speicherbereiche eines Speichers zu beschreiben. Auf diese Weise wird ein einfaches Zusammenfügen linear benachbarter, verfügbarer Speicherbereiche zu einem größeren verfügbaren Bereich sowie das lineare Vergrößern bzw. Verkleinern von zugeteilten Speicherbereichen erleichtert. Eine darüber hinausgehende Kompaktierung ist jedoch nicht beschrieben.

Das Dokument WO 2005/066791 A1 offenbart ein Verfahren zur Speicherverwaltung in einer Speichereinrichtung, wobei einem Zentralprozessor CPU eine Perförmanz-Überwachungseinrichtung "performance monitoring unit" PMU zugeordnet ist, die Speicherbereiche bewertet und entsprechend der Bewertung unterschiedliche Speicherverwaltungs-Routinen veranlasst, die durch einen Speicherverwaltungsblock durchgeführt werden.

US 2006/059453 A1 lehrt ein Verfahren zur Speicherverwaltung, bei dem mehrere Virtuelle Maschinen zur Speicherbereinigung eine gemeinsame Garbage Collection Routine nutzen.

DE 102 49 597 A1 offenbart ein Verfahren zur automatischen Speicherbereinigung (garbage collection) in einem tragbaren Datenträger.

WO 95/12165 A1 offenbart ein verteiltes Speicherverwaltungssystem, bei dem jeder von mehreren einzelnen Prozessen jeweils einen eigenen Speicherbereich zur Verfügung hat, in dem der jeweilige Prozess unabhängig von den Aktivitäten anderer Prozesse Speicher belegen kann.

Die WO 2008/017204 A1 beschreibt eine multitasking-fähige Virtuelle Maschine zum nebenläufigen Ausführen einer Mehrzahl von Prozessen, die eine Mehrzahl von Task Heaps umfasst, die jeweils durch einen eigenen Task Heap Manager verwaltet werden. Die Task Heap Manager entsprechen Speicheranteilsverwaltungen zur autonomen Verwaltung von Task Heaps, in der Terminologie des Oberbegriffs von Anspruch 1.

Aufgabe der vorliegenden Erfindung ist es demnach, ein Verfahren zur dynamischen Verwaltung eines volatilen Speichers vorzuschlagen, welches den vorstehend genannten Nachteilen begegnet.

Diese Aufgabe wird durch ein Verfahren und einen portablen Datenträger mit den Merkmalen der unabhängigen Ansprüche gelöst. Vorteilhafte Ausgestaltungen und Weiterbildungen werden in den abhängigen Ansprüchen angegeben.

Bei einem erfindungsgemäßen Verfahren in einem portablen Datenträger zum dynamischen Verwalten eines volatilen Speichers durch eine dynamische Gesamtspeicherverwaltung des Datenträgers wählt die Gesamtspeicherverwaltung einen in dem volatilen Speicher als Freispeicher vorhandenen Speicheranteil aus und übergibt den ausgewählten Speicheranteil an eine Speicheranteilsverwaltung zur autonomen Verwaltung. Die Erfindung zeichnet sich dadurch aus, dass die Gesamtspeicherverwaltung während einer Speicherbereinigung des volatilen Speichers die Speicherunteranteile relativ zu dem Speicheranteil unverändert lässt.

Ein entsprechender Datenträger umfasst demnach einen volatilen Speicher, einen Prozessor sowie ein Betriebssystem mit einer Gesamtspeicherverwaltungseinrichtung. Erfindungsgemäß umfasst der Datenträger eine Speicheranteilsverwaltungseinrichtung, die einen in dem volatilen Speicher als Freispeicher vorhandenen, von der Gesamtspeicherverwaltungseinrichtung ausgewählten und der Speicheranteilsverwaltungseinrichtung übergebenen Speicheranteil übernimmt und autonom verwaltet.

Auf diese Weise wird die Gesamtspeicherverwaltung, insbesondere während einer Speicherbereinigung des volatilen Speichers, durch die ihr untergeord-nete Speicheranteilsverwaltung entlastet, indem die Speicheranteilsverwaltung die Verwaltung des ihr übergebenen Speicheranteils autonom von der übergeordneten Gesamtspeicherverwaltung vornimmt, d.h. ohne dass diese Ressourcen zur Verwaltung des übergebenen Speicheranteils aufwenden muss. Dadurch belasten sämtliche von der Gesamtspeicherverwaltung an eine Speicheranteilsverwaltung übergebenen Speicheranteile des volatilen Speichers die Gesamtspeicherverwaltung während der Speicherbereinigung allenfalls eingeschränkt, da die interne Verwaltung dieser Speicheranteile, also auch die interne Speicherbereinigung, der jeweiligen Speicheranteilsverwaltung obliegt und von dieser in geeigneter Weise ausgeführt wird. Folglich ist der volatile Speicher des Datenträgers aus Sicht der Gesamtspeicherverwaltung weniger fragmentiert, da die interne Struktur der an die Speicheranteilsverwaltung übergebenen Speicheranteile für die Gesamtspeicherverwaltung unwesentlich ist, d.h. die Gesamtspeicherverwaltung sieht den an die Speicheranteilsverwaltung übergebenen Speicheranteil im Ganzen solange als belegt an, bis dieser von der Speicheranteilsverwaltung nicht mehr benötigt wird. Die Speicherbereinigung des volatilen Speichers durch die Gesamtspeicherverwaltung wird dadurch effizienter und schneller.

Die Speicheranteilsverwaltung kann ihrerseits die Art und Weise, wie sie den ihr von der Gesamtspeicherverwaltung übergebenen Speicheranteil, insbesondere hinsichtlich seiner internen Struktur, autonom verwaltet, individuell und an die vorliegenden Umstände angepasst bestimmen. Insbesondere kann die Speicheranteilsverwaltung eine individuelle Speicherbereinigung für den übergebenen Speicheranteil bereitstellen, die auf Prozesse oder Laufzeitstrukturen abgestimmt ist, die den zugeteilten Speicheranteil ganz oder teilweise als Freispeicher benötigen. Verschiedene Speicheranteilsverwaltungen, denen von der Gesamtspeicherverwaltung jeweils verschiedene Speicheranteile übergeben werden, können sich deshalb sowohl hinsichtlich ihrer Speicherverwaltungs- und Zuteilungsstrategien als auch hinsichtlich ihrer Speicherbereinigungsverfahren unterscheiden.

Somit wird erfindungsgemäß eine effektive Verwaltung der volatilen Speicherressourcen des Datenträgers, insbesondere im Hinblick auf eine Speicherbereinigung des volatilen Speichers, ermöglicht, wodurch sich auch insgesamt eine effizientere Prozessausführung und ein effizienteres Laufzeitverhalten des Datenträgers ergeben.

Erfindungsgemäß verwaltet die Speicheranteilsverwaltung bei der autonomen Verwaltung Speicherunteranteile innerhalb des ihr übergebenen Speicheranteils. Die gesamte Verwaltung der Speicherunteranteile, also z.B. deren Anlegen, Positionieren, Verschieben, Kompaktieren und/oder Löschen innerhalb des Speicheranteils, obliegt alleine der autonomen Kontrolle der Speicheranteilsverwaltung. Derartige Speicherverwaltungsvorgänge innerhalb des Speicheranteils sind für die Gesamtspeicherverwaltung in der Regel transparent.

Bei einer bevorzugten Ausführungsform der vorliegenden Erfindung kann die Speicheranteilsverwaltung einem auf dem Datenträger ausführbaren Prozess zugeordnet werden und einen oder mehrere Speicherunteranteile als dem Prozess zugeteilten Freispeicher verwalten. Auf diese Weise ist es möglich, den gesamten volatilen Speicher individuell angepasst an die Anforderungen von Prozessen oder anderen Laufzeitstrukturen zu verwalten, so dass die verschiedenen Anforderungen der Prozesse und Laufzeitstrukturen bei der Speicherverwaltung optimal berücksichtigt werden können. So kann es z.B. für einen Prozess wesentlich sein, dass gewisse Speicherunteranteile innerhalb eines zusammenhängenden Speicherbereichs des Speicheranteils zugeteilt werden. Für einen anderen Prozess kann es z.B. wesentlich sein, dass von diesem Prozess nicht mehr benötigte Speicherunteranteile umgehend freigegeben und damit dem Prozess erneut zuteilbar zur Verfügung stehen. Die Speicheranteilsverwaltung, die dem jeweiligen Prozess zugeordnet ist, kann also derart ausgebildet sein, dass sie die wesentlichsten Anforderungen dieses Prozesses in optimaler Weise erfüllt.

Gemäß einem Aspekt der Erfindung lässt die Gesamtspeicherverwaltung während einer Speicherbereinigung des volatilen Speichers die Unteranteile eines übergebenen Speicheranteils relativ zu dem Speicheranteil bzw. relativ zu allen anderen Speicherunteranteilen des Speicheranteils unverändert. Auf diese Weise ist für die betreffende Speicheranteilsverwaltung sichergestellt, dass die Positionen der Speicherunteranteile innerhalb des Speicheranteils relativ zu einer Basisposition, welche die Position des Speicheranteils innerhalb des volatilen Speichers definiert, nicht verändert werden. D.h. insbesondere, dass lokale Referenzen, mittels derer die Speicheranteilsverwaltung Speicherunteranteile referenziert und/oder mittels derer sich Speicherunteranteile gegenseitig referenzieren, unverändert bleiben - eventuell mit Ausnahme der Addition/Subtraktion einer für sämtliche lokalen Referenzen des Speicheranteils gemeinsamen Adresse ("Offset"). Auf diese Weise unterbleibt der Aufwand für die Anpassung der lokalen Referenzen als Folge einer Speicherbereinigung des volatilen Speichers durch die Gesamtspeicherverwaltung.

Bei einer ersten Variante dieser Ausgestaltung belässt die Gesamtspeicherverwaltung während der Speicherbereinigung den Speicheranteil unverändert an seiner Position in dem volatilen Speicher. Auf diese Weise kann neben dem Aufwand zur Anpassung lokaler Referenzen innerhalb des Speicheranteils - wie vorstehend beschrieben - zusätzlich der Aufwand zum Verschieben, d.h. Umkopieren, des Speicheranteils innerhalb des volatilen Speichers vollständig vermieden werden. Die Speicherbereinigung erfordert infolgedessen weniger Rechenzeit und die eventuelle Unterbrechung nebenläufig ablaufender Prozesse wird auf ein Minimum begrenzt.

Eine zweite Variante der beschriebenen Ausführungsform lässt zu, dass der Speicheranteil als Ganzes, d.h. als ein einziger zusammenhängender Speicherbereich, innerhalb des volatilen Speichers im Rahmen einer Speicherbereinigung durch die Gesamtspeicherverwaltung verschoben wird. Wie vorstehend beschrieben, ändern sich die lokalen Referenzen innerhalb des Speicheranteils dabei lediglich um einen gemeinsamen Offset-Wert. Zwar fällt hierbei der Aufwand zum Umkopieren des Speicheranteils während der Speicherbereinigung an. Auf der anderen Seite kann dieser Aufwand aber dadurch in der Regel wieder eingespart werden, dass aufgrund der Möglichkeit, an die Speicheranteilsverwaltung übergebene Speicheranteile während der Speicherbereinigung innerhalb des volatilen Speichers zu verschieben, eine bessere Kompaktierung desselben erreichbar ist. Infolgedessen wird das Zeitintervall bis zur nächsten erforderlichen Speicherbereinigung in der Regel vergrößert und dadurch der zum Verschieben des Speicheranteils aufgebrachte Zeitaufwand wieder kompensiert.

Um anzugeben, auf welche Weise ein an die Speicheranteilsverwaltung übergebener Speicheranteil während einer Speicherbereinigung durch die Gesamtspeicherverwaltung zu behandeln ist (also beispielsweise gemäß einer der beiden beschriebenen Varianten), kann die Gesamtspeicherverwaltung den Speicheranteil mit einem Verwaltungsattribut versehen. Dieses kann also beispielsweise aussagen, dass der Speicherbereich während der Speicherbereinigung nach der ersten Variante prinzipiell nicht oder nach der zweiten Variante nur als ein einziger zusammenhängender Speicherbereich verschoben werden darf. Dabei können die Verwaltungsattribute für verschiedene Speicheranteile verschieden sein.

Eine die Gesamtspeicherverwaltung implementierende Gesamtspeicherverwaltungseinrichtung kann insbesondere als Teil einer multithreadingfähigen Virtuellen Maschine den volatilen Speicher des Datenträgers dynamisch gemäß dem erfinderischen Verfahren verwalten. Die Virtuelle Maschine kann dabei in ein Betriebssystem des Datenträgers integriert sein oder dieses ersetzen. Auch eine Speicheranteilsverwaltung kann Teil der Virtuellen Maschine sein. Es ist aber auch möglich, dass eine Speicheranteilsverwaltung unabhängig von der Gesamtspeicherverwaltung und als nicht zu der Virtuellen Maschine gehörig bereitgestellt wird. Eine komplexe Applikation, die als Prozess auf dem Datenträger ausführbar ist, kann eine solche Speicheranteilsverwaltung zur Verwaltung ihrer Speicherressourcen beinhalten. Dabei arbeitet diese Speicheranteilsverwaltung, wie beschrieben, unabhängig von der Gesamtspeicherverwaltung auf dem Speicheranteil, der ihr von der Gesamtspeicherverwaltung zur autonomen Verwaltung übergeben worden ist.

Als Datenträger, dessen volatile Speicherressourcen wie vorstehend beschrieben verwaltet werden, kommen beispielsweise eine Chipkarte, eine sichere Multimediakarte, eine (U)SIM-Mobilfunkkarte, ein USB-Speichermedium oder dergleichen in Frage.

Die Erfindung wird im Folgenden mit Bezug auf die beiliegenden Zeichnungen beispielhaft beschrieben. Darin zeigen:
- Fig.1: eine bevorzugte Ausführungsform eines erfindungsgemäßen Datenträgers;
- Fig. 2A: schematisch den volatilen Speicher des Datenträgers aus Fig.1 vor einer Speicherbereinigung;
- Fig. 2B: den volatilen Speicher aus Fig. 2A nach einer Speicherbereinigung durch eine Gesamtspeicherverwaltung gemäß einer ersten Variante einer Ausführungsform des erfindungsgemäßen Verfahrens; und
- Fig. 2C: den volatilen Speicher aus Fig. 2A nach einer Speicherbereinigung durch eine Gesamtspeicherverwaltung gemäß einer zweiten Variante einer Ausführungsform des erfindungsgemäßen Verfahrens.

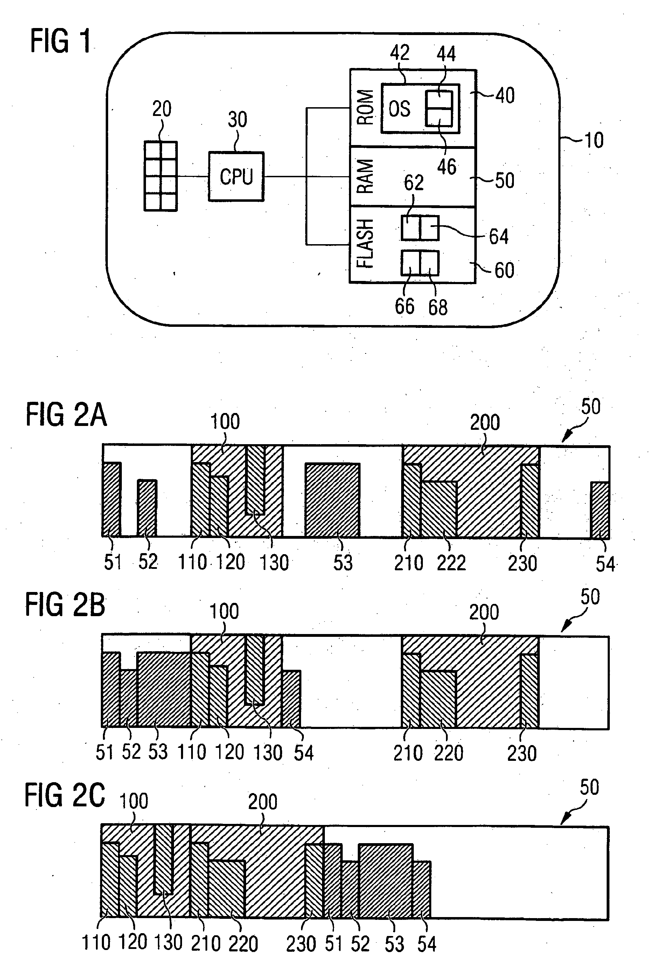

Mit Bezug auf Fig.1 umfasst ein Datenträger 10, der hier als Chipkarte ausgebildet ist, eine Datenkommunikationsschnittstelle 20, einen Prozessor (CPU) 30 und verschiedene Speicher 40, 50 und 60. Der Datenträger 10 kann auch in anderer Gestalt ausgebildet sein, z.B. als USB-Speichermedium, als (U)SIM-Mobilfunkkarte, als sichere Multimediakarte oder dergleichen.

Die Datenkommunikationsschnittstelle 20 ist als Kontaktfeld gemäß ISO 7816 ausgebildet und dient zur Datenkommunikation mit einer externen Datenverarbeitungseinrichtung (nicht dargestellt), z.B. einem Kartenterminal, sowie zur Energieversorgung des Datenträgers 10. Alternativ oder zusätzlich kann der Datenträger 10 auch über eine eigene Energieversorgung (nicht dargestellt) verfügen, z.B. über eine Batterie. Auch andere kontaktbehaftete Schnittstellen können vorgesehen sein. Alternativ oder zusätzlich kann auch eine Kontaktlos-Datenkommunikationsschnittstelle (nicht dargestellt) zur kontaktlosen Datenkommunikation vorgesehen sein, z.B. eine Antenne.

In dem nicht flüchtigen, nicht wiederbeschreibbaren ROM-Speicher 40 liegt ein Betriebssystem (OS) 42, welches den Datenträger 10 steuert. Das Betriebssystem 42 umfasst eine Gesamtspeicherverwaltungseinrichtung 44 und eine erste Speicheranteilsverwaltungseinrichtung 46. Die Gesamtspeicherverwaltungseinrichtung 44 verwaltet, auch in Zusammenarbeit mit der Speicheranteilsverwaltungseinrichtung 46 und eventuell weiteren gleichartigen Einrichtungen, dynamisch die volatilen Speicherressourcen 50 des Datenträgers 10, wie nachstehend mit Bezug auf die Figuren 2A, 2B und 2C detailliert beschrieben. Die Speicheranteilsverwaltungseinrichtung 46 muss nicht Teil des Betriebssystems 42 sein, sondern kann auch lediglich von diesem aktiviert werden. Der RAM-Speichers 50 stellt die volatilen Speicherressourcen des Datenträgers 10 dar und dient dem Datenträger 10 bzw. den auf dem Prozessor 30 des Datenträgers 10 ausgeführten Prozessen als schneller Arbeitsspeicher.

Alternativ kann das Betriebssystem 42 oder zumindest Teile davon, wie z.B. die Gesamtspeicherverwaltungseinrichtung 44, in dem wiederbeschreibbaren, nicht flüchtigen FLASH-Speicher 60, der alternativ auch als EEPROM-Speicher oder dergleichen ausgebildet sein kann, gespeichert sein. Der FLASH-Speicher 60 stellt Bereiche zum Speichern weiterer Applikationen bereit, wie z.B. nachstehend beschriebener Applikationen 62, 66 und diesen jeweils zugeordneten Speicherverwaltungseinrichtungen 64, 68.

Mit Bezug auf die Figuren 2A, 2B und 2C wird nachstehend die dynamische Verwaltung des volatilen Speichers 50 des Datenträgers 10 erläutert. Die Gesamtspeicherverwaltungseinrichtung 44 bedient Speicheranforderungen von auf dem Prozessor 30 des Datenträgers 10 laufenden Prozessen auf höchster Ebene, d.h. eine Zuteilung eines Speicherbereichs 51, 52, 53, 54 in dem Speicher 50 für neu gestartete Prozesse erfolgt stets durch die Gesamtspeicherverwaltungseinrichtung 44. Diese Speicherbereiche 51, 52, 53, 54 werden, solange sie von den entsprechenden Prozessen benötigt werden, von der Gesamtspeicherverwaltung 44 verwaltet, beispielsweise während einer Speicherbereinigung durch die Gesamtspeicherverwaltungseinrichtung 44, wie nachstehend mit Bezug auf die Figuren 2B und 2C näher erläutert. Signalisiert ein Prozess, dass er den ihm zugeordneten Speicherbereich 51, 52, 53, 54 nicht mehr benötigt, beispielsweise weil der Prozess beendet wird, oder erkennt die Gesamtspeicherverwaltungseinrichtung 44 ihrerseits, dass ein Speicherbereich 51, 52, 53, 54 nicht mehr benötigt wird, weil dieser beispielsweise nicht mehr referenziert wird, so gibt die Gesamtspeicherverwaltungseinrichtung 44 diesen Speicherbereich 51, 52, 53, 54 wieder frei.

Neben der Gesamtspeicherverwaltungseinrichtung 44 finden sich auf dem Datenträger 10 eine dem Betriebssystem 42 zugeordnete Speicheranteilsverwaltungseinrichtung 46 sowie zwei weitere Speicheranteilsverwaltungseinrichtungen 64 und 68. Letztere sind eingerichtet, Speicheranforderungen von den Applikationen 62 und 66 zugeordneten Prozessen (welche im Folgenden ebenfalls mit 62 bzw. 66 bezeichnet werden) zu verwalten. Die Speicheranteilsverwaltungseinrichtungen 46, 64, 68 sind nicht berechtigt, ihrerseits anfordernden Prozessen direkt Speicheranteile des volatilen Speichers 50 zuzuteilen. Diese Aufgabe erfüllt, wie erwähnt, die Gesamtspeicherverwaltungseinrichtung 44. Es ist vielmehr vorgesehen, dass die Gesamtspeicherverwaltungseinrichtung 44 in dem volatilen Speicher 50 als Freispeicher vorhandene Speicheranteile 100, 200 auswählt und diese Speicheranteile 100, 200 dann einer der Speicheranteilsverwaltungen 46, 64, 68 zur autonomen Verwaltung übergibt. Aus Sicht der Gesamtspeicherverwaltungseinrichtung 44 ist ein solcher an eine Speicheranteilsverwaltungseinrichtung 46, 64, 68 übergebener Speicheranteil 100, 200 zugeteilt und nicht mehr verfügbar, selbst wenn noch kein auf dem Prozessor 30 ausgeführten Prozess dieser Speicheranteil tatsächlich nutzt. Die weitere Verwaltung des Speicheranteils 100, 200 obliegt dann der jeweiligen Speicheranteilsverwaltung 46, 64, 68. Sie kann dann den Speicheranteil 100, 200 oder zumindest Speicherunteranteile 110,120,130 bzw. 210, 220, 230 an einen Prozess, welcher der Speicheranteilsverwaltung 46, 64, 68 zugeordnet ist, zuteilen. In dieser Hinsicht stellt die Kombination aus Gesamtspeicherverwaltungseinrichtung 44 und zumindest einer Speicheranteilsverwaltung 46, 64, 68 ein hierarchisches Speicherverwaltungssystem dar, in dem die Gesamtspeicherverwaltungseinrichtung 44 die höchste Stufe einnimmt.

Fig. 2A zeigt einen Speicheranteil 100 innerhalb des volatilen Speichers 50, wobei der Speicheranteil 100 der Speicheranteilsverwaltungseinrichtung 64 durch die Gesamtspeicherverwaltungseinrichtung 44 beim Start des zu der Applikation 62 gehörigen Prozesses 62 übergeben worden ist. Die Speicherverwaltungseinrichtung 64 verwaltet den Speicherbereich 100 autonom und teilt dem Prozess 62 von diesem angeforderte Speicherressourcen in Form von Speicherunteranteilen 110,120,130 zu. Der Speicheranteil 100 steht solange exklusiv unter der Kontrolle der Speicheranteilsverwaltungseinrichtung 64, bis diese der Gesamtspeicherverwaltung 44 signalisiert, dass sie den Speicheranteil 100 nicht mehr benötigt, beispielsweise weil der Prozess 62 beendet ist. Die Art und Weise, wie die Speicheranteilsverwaltungseinrichtung 64 den Speicheranteil 100 verwaltet, ist auf den Prozess 62 abgestimmt. D.h. die Speicheranteilsverwaltungseinrichtung 64 verwaltet den Speicheranteil 100 für den Prozess 62 in der Weise, dass dessen Speicheranforderungen stets umgehend und in ausreichenden Maß erfüllt werden können. Dabei obliegt ihr nicht nur die Aufgabe, dem Prozess 62 Speicherunteranteile 110, 120,130 auf Anforderung zuzuteilen und diese wieder freizugeben, wenn diese von dem Prozess 62 nicht mehr benötigt werden. Auch eine geeignete Speicherbereinigung des Speicheranteils 100 wird durch die Speicheranteilsverwaltungseinrichtung 64 durchgeführt, um einer eventuell erfolgten Fragmentierung des Speicheranteils 100 entgegenzuwirken. Die Speicheranteilsverwaltungseinrichtung 64 kann für den Prozess 62 weitere Speicherressourcen bei der Gesamtspeicherverwaltungseinrichtung 44 anfordern, falls der Speicheranteil 100 nicht ausreicht, um die Speicheranforderungen des Prozesses 62 zu decken. Die Gesamtspeicherverwaltungseinrichtung 44 kann daraufhin, falls möglich, den Speicheranteil 100 vergrößern oder der Speicheranteilsverwaltung 64 einen weiteren Speicheranteil (nicht gezeigt) übergeben. Durch die Möglichkeit eines solchen Vorgehens kann vermieden werden, dass der Speicheranteil 100 zu Beginn zu groß dimensioniert werden muss, wenn der genaue Speicherbedarf des Prozesses 62 nicht bekannt ist.

In analoger Weise verwaltet die Speicheranteilsverwaltungseinrichtung 68 den Speicheranteil 200, der ihr von der Gesamtspeicherverwaltungseinrichtung 44 übergeben worden ist, für den der Applikation 66 zugehörigen Prozess 66. Dabei können die konkreten Verfahren zum Zuteilen und Freigeben von Speicherunteranteilen 210, 220, 230 sowie zum Kompaktieren des Speicheranteils 200 von denen der von der Speicheranteilsverwaltungseinrichtung 64 verwendeten abweichen, um den speziellen Anforderungen des Prozesses 66, welche von denen des Prozesses 62 abweichen können, Rechnung zu tragen. Weiterhin ist es möglich, dass der Speicheranteilsverwaltungseinrichtung 46, die dem Betriebssystem 42 zugeordnet ist, durch die Gesamtspeicherverwaltungseinrichtung 44 ein Speicheranteil (nicht gezeigt) übergeben wird, beispielsweise zur Verwaltung der Speicherressourcen einer Bibliotheksfunktion. Diesen Speicheranteil verwaltet die Speicheranteilsverwaltung 46 dann autonom in der mit Bezug auf die Speicheranteilsverwaltungseinrichtungen 64, 68 beschriebenen Weise.

Wie mit Bezug auf Fig. 2A schematisch dargestellt, kann ein fortwährendes Zuteilen von Speicheranteilen 100, 200 an die Speicheranteilsverwaltungseinrichtungen 64, 68 sowie von weiteren Speicherbereichen 51, 52, 53, 54 direkt an anfordernde Prozesse zu einer Fragmentierung des volatilen Speichers 50 führen. Fordert nun ein weiterer Prozess bei seinem Start einen Speicherbereich einer gewissen Größe an, beispielsweise der Größe des Speicheranteils 100, welcher in dem Speicher 50 aktuell als ein zusammenhängender Freispeicherbereich nicht zur Verfügung steht, so hat die Gesamtspeicherverwaltungseinrichtung 44 eine Speicherbereinigung ("Garbage Collection") durchzuführen. Diese beinhaltet in der Regel zwei Phasen. In der ersten Phase werden zugeteilte Speicherbereiche und -anteile identifiziert, die von den entsprechenden Prozessen oder Speicheranteilsverwaltungseinrichtungen nicht mehr benötigt werden. Hierzu sind zahlreiche Verfahren bekannt, die hier nicht beschrieben werden. Die entsprechend identifizieren Speicherbereiche und -anteile werden von der Gesamtspeicherverwaltungseinrichtung 44 dann als wieder zuteilbar, d.h. als Freispeicherbereiche, markiert. Fig. 2A zeigt den Zustand des Speichers 50 nach Abschluss dieser ersten Phase. In einer zweiten Phase, der Kompaktierung, werden nun die zugeteilten bzw. übergebenen Speicherbereiche 51, 52, 53, 54 und -anteile 100, 200, welche aktuell von den Prozessen, denen sie als Arbeitspeicher dienen, noch benötigt werden, gemäß nachfolgend beschriebener Vorgaben innerhalb des Speichers 50 derartig verschoben oder umgeordnet, dass möglichst große zusammenhängende Freispeicherbereiche innerhalb des Speichers 50 entstehen.

Die Verfügungsberechtigung der Gesamtspeicherverwaltungseinrichtung 44 über die den Speicheranteilsverwaltungseinrichtungen 64, 68 übergebenen Speicheranteile 100, 200 ist dabei eingeschränkt. In jedem Falle ist die Gesamtspeicherverwaltungseinrichtung 44 nicht berechtigt, die interne Struktur der übergebenen Speicheranteile 100, 200 zu verändern, da, wie beschrieben, die interne Verwaltung dieser Speicherbereiche ausschließlich den Speicheranteilsverwaltungen 64, 68 obliegt. D.h. insbesondere, dass die Gesamtspeicherverwaltungseinrichtung 44 innerhalb der Speicheranteile 100, 200 keine Kompaktierung vornehmen kann. Für die Gesamtspeicherverwaltungseinrichtung 44 entsprechen die Speicheranteile 100, 200 in dieser Phase vollständig zugeteilten Speicherbereichen. Diese können jedoch weiteren Einschränkungen bezüglich der Behandlung während der Speicherbereinigung unterworfen sein.

Fig. 2B zeigt das Ergebnis nach Abschluss der Kompaktierungsphase gemäß einer ersten Variante. Hierbei ist es der Gesamtspeicherverwaltungseinrichtung 44 verboten, die Speicheranteile 100, 200 während der Kompaktierung innerhalb des Speichers 50 zu verschieben. Lediglich die Speicherbereiche 51, 52, 53, 54 dürfen umkopiert werden. Dies ist, wie veranschaulicht, für die Anteile 52, 53 und 54 auch erfolgt. Auf diese Weise sind im Vergleich zum Zustand vor der Kompaktierung (vgl. Fig. 2A) größere Freispeicherbereiche in dem Speicher 50 entstanden, im Wesentlichen durch die Verschiebung des Speicherbereichs 53.

Gemäß einer zweiten Variante, deren Ergebnis in Fig. 2C dargestellt ist, kann es der Gesamtspeicherverwaltungseinrichtung 44 erlaubt sein, die Speicheranteile 100, 200 als Ganzes, d.h. als zusammenhängende Speicherbereiche unter Beibehaltung deren innerer Struktur, innerhalb des Speichers 50 umzukopieren. In der Regel ergeben sich gemäß dieser Variante, wie schematisch dargestellt, im Vergleich zur ersten Variante (vgl. Fig. 2B), nochmals größere zusammenhängende Freispeicherbereiche.

Der Aufwand für die beiden Varianten unterscheidet sich, wobei derjenige für die erste Varianten geringer ist, da kein Umkopieren der Speicheranteile 100, 200 vorgenommen wird. Bei beiden Varianten verbleiben die internen Referenzen innerhalb der Speicheranteile 100, 200 im Wesentlichen konstant. Bei der zweiten Variante können sich diese, falls ein Speicheranteil 100, 200 tatsächlich verschoben wird, einheitlich um einen dieser Verschiebung entsprechenden Offset verändern. Dieses anzupassen erfordert jedoch kaum einen Aufwand verglichen mit dem Aufwand, der anfallen würde, wenn auch innerhalb der Speicheranteile 100, 200 die Speicherunterteile 110,120, 130 bzw. 210, 220, 230 beliebig verschoben werden könnten und die jeweiligen Referenzen vollständig neu angepasst werden müssten. Die Anpassung der Referenzen auf die bzw. innerhalb der Menge der eventuell verschobenen Speicherbereiche 51, 52, 53, 54 muss bei beiden Varianten erfolgen.

Neben den beiden beschriebenen Varianten sind weitere, beispielsweise gemischte Varianten möglich. D.h. es kann der Gesamtspeicherverwaltungseinrichtung 44 erlaubt sein, einige der Speicheranteile 100, 200 während einer Speicherbereinigung zu verschieben. Für andere Speicherbereiche 100, 200 kann dies aber ausgeschlossen sein. Um die Speicheranteile 100, 200 entsprechend zu kennzeichnen, kann die Gesamtspeicherverwaltungseinrichtung 44 die Speicheranteile 100, 200 mit einem entsprechenden Verwaltungsattribut (nicht gezeigt) versehen, welches anzeigt, in welcher Weise der entsprechende Speicheranteil 100, 200 während einer Speicherbereinigung des volatilen Speichers 50 durch die Gesamtspeicherverwaltungseinrichtung 44 zu behandeln ist. Das Verwaltungsattribut kann im Rahmen einer objektorientierten Implementation beispielsweise Teil eines Objekttyps sein, welcher das Objekt, d.h. den Speicheranteil 100, 200, beschreibt und weitere Informationen, z.B. die Größe des Objekts, seine Anordnung im Speicher 50 und dergleichen, umfasst. Ein solches Verwaltungsattribut kann also beispielsweise aussagen, dass der attributierte Speicheranteil 100, 200 während einer Speicherbereinigung prinzipiell nicht verschoben werden darf. Es ist möglich vorzusehen, dass ein Verwaltungsattribut eines Speicheranteils 100, 200 während der Lebensdauer des Speicheranteils 100, 200 verändert wird bzw. bedingte Aussagen macht. Eine solche Veränderung des Verwaltungsattributs kann vom Betriebssystem 42 bzw. der Gesamtspeicherverwaltungseinrichtung 44 oder aber von einer Speicheranteilsverwaltungseinrichtung 64, 68, welcher der Speicheranteils 100, 200 übergeben worden ist, bzw. einem der Speicheranteilsverwaltungseinrichtung 64, 68 zugeordneten Prozess 62, 66 erfolgen. Das Verwaltungsattribut kann beispielsweise abhängig vom Zustand eines Prozesses 62, 66, welcher aus dem entsprechenden Speicherbereich 100, 200 seine Speicheranforderungen deckt, verändert werden bzw. bedingte Aussagen machen. So kann das Attribut z.B. anzeigen bzw. derartig angepasst werden, dass der Speicheranteil 100, 200 nur dann verschoben werden darf, wenn der Prozess 62, 66 nicht aktiv ist. Bei aktivem, d.h. aktuell "rechnendem" Prozess 62, 66, der nebenläufig zur Speicherbereinigung ausgeführt wird, soll ein Verschieben des Speicherbereichs 100, 200 hingegen verboten sein.

Es ist auch möglich, die Speicheranteile 100, 200 dadurch zu kennzeichnen, auf welche Weise und durch welche Instanzen des Datenträgers 10 auf die Speicheranteil 100, 200 zugegriffen werden kann. So kann die Referenz auf einen Speicheranteil 100, 200 beispielsweise in einer globalen Variable oder aber in einer lokalen Variable abgelegt werden.

Wird ein Speicheranteil 100, 200 durch die Gesamtspeicherverwaltungseinrichtung 44 gelöscht, so kann dies beispielsweise dadurch erfolgen, dass die Referenz auf den entsprechenden Speicheranteil 100, 200 in der internen Speicherverwaltungsstruktur der Gesamtspeicherverwaltungseinrichtung 44 auf den Wert NULL gesetzt wird. Auf diese Weise wird ein effektives Löschen nicht mehr benötigter Speicherbereiche 100, 200 ermöglicht. Gleichzeitig kann eine eventuell nachfolgende Speicherbereinigung in der ersten Phase auf die entsprechende Information direkt zugreifen.

## Patentansprüche

1. Verfahren in einem portablen Datenträger (10) mit einer dynamischen Gesamtspeicherverwaltung (44) eines volatilen Speichers (50) des Datenträgers (10), wobei die Gesamtspeicherverwaltung (44) einen in dem volatilen Speicher (50) als Freispeicher vorhandenen Speicheranteil (100; 200) auswählt und einer Speicheranteilsverwaltung (46; 64; 68) zur autonomen Verwaltung übergibt, wobei die Speicheranteilsverwaltung (46; 64; 68) bei der autonomen Verwaltung des übergebenen Speicheranteils (100; 200) Speicherunteranteile (110,120,130; 210, 220, 230) innerhalb des Speicheranteils (100; 200) verwaltet, **dadurch gekennzeichnet, dass** die Gesamtspeicherverwaltung (44) während einer Speicherbereinigung des volatilen Speichers (50) die Speicherunteranteile (110, 120, 130; 210, 220, 230) relativ zu dem Speicheranteil (100; 200) unverändert lässt.

2. Verfahren nach Anspruch 1, **dadurch gekennzeichnet, dass** die Gesamtspeicherverwaltung (44) den Speicheranteil (100; 200) mit einem Verwaltungsattribut versieht, welches angibt, in welcher Weise der Speicheranteil (100; 200) während der Speicherbereinigung durch die Gesamtspeicherverwaltung (44) zu behandeln ist.

3. Verfahren nach Anspruch 1 oder 2, **dadurch gekennzeichnet, dass** die Gesamtspeicherverwaltung (44) während der Speicherbereinigung den Speicheranteil (100; 200) unverändert an seiner Position in dem volatilen Speicher (50) belässt.

4. Verfahren nach Anspruch 1 oder 2, **dadurch gekennzeichnet, dass** die Gesamtspeicherverwaltung (44) während der Speicherbereinigung den Speicheranteil (100; 200) als Ganzes in dem volatilen Speicher (50) verschiebt.

5. Verfahren nach einem der Ansprüche 1 bis 4, **dadurch gekennzeichnet, dass** die Speicheranteilsverwaltung (64; 68) des Speicheranteils (100; 200) einem auf dem Datenträger (10) ausführbaren Prozess (62; 66) zugeordnet wird und die Speicherunteranteile (110,120,130; 210, 220, 230) als Speicherressourcen des Prozesses (62; 66) verwaltet.

6. Verfahren nach einem der Ansprüche 1 bis 5, **dadurch gekennzeichnet, dass** die Gesamtspeicherverwaltung (44) den volatilen Speicher (50) als Teil einer multithreading-fähigen Virtuellen Maschine verwaltet..

7. Portabler Datenträger (10), umfassend einen volatilen Speicher (50), einen Prozessor (30) sowie ein Betriebssystem (42) mit einer Gesamtspeicherverwaltungseinrichtung (44), und eine Speicheranteilsverwaltungseinrichtung (46; 64, 68), die eingerichtet ist, einen in dem volatilen Speicher (50) als Freispeicher vorhandenen, von der Gesamtspeicherverwaltungseinrichtung (44) ausgewählten Speicheranteil (100; 200) von der Gesamtspeicherverwaltung (44) zu übernehmen und autonom zu verwalten,
wobei die Speicheranteilsverwaltung (46; 64; 68) eingerichtet ist, bei der autonomen Verwaltung des übergebenen Speicheranteils (100; 200) Speicherunteranteile (110, 120, 130; 210, 220, 230) innerhalb des Speicheranteils (100; 200) zu verwalten,
**dadurch gekennzeichnet, dass**
dass die Gesamtspeicherverwaltung (44) eingerichtet ist, während einer Speicherbereinigung des volatilen Speichers (50) die Speicherunteranteile (110,120,130; 210, 220, 230) relativ zu dem Speicheranteil (100; 200) unverändert zu lassen.

8. Datenträger (10) nach Anspruch 7, **dadurch gekennzeichnet, dass** die Gesamtspeicherverwaltungseinrichtung (44) und die Speicheranteilsverwaltungseinrichtung (46; 64; 68) eingerichtet sind, den volatilen Speicher (50) gemäß einem Verfahren nach einem der Ansprüche 1 bis 6 zu verwalten.

9. Datenträger (10) nach Anspruch 7 oder 8, **dadurch gekennzeichnet, dass** der Datenträger (10) als Chipkarte, sichere Multimediakarte, USIM-, Mobilfunkkarte oder USB-Speichermedium ausgebildet ist.

## Claims

1. A method in a portable data carrier (10) having a dynamic overall memory management (44) of a volatile memory (50) of the data carrier (10), wherein the overall memory management (44) chooses a memory portion (100; 200) present as free memory in the volatile memory (50) and assigns it to a memory portion management (46; 64; 68) for autonomous management, wherein, in the autonomous management of the assigned memory portion (100; 200), the memory portion management (46; 64; 68) manages memory sub-portions (110, 120, 130; 210, 220, 230) within the memory portion (100; 200), **characterized in that** the overall memory management (44) leaves the memory sub-portions (110, 120, 130; 210, 220, 230) unchanged relative to the memory portion (100; 200) during a memory cleanup of the volatile memory (50).

2. The method according to claim 1, **characterized in that** the overall memory management (44) supplies the memory portion (100; 200) with a management attribute indicating in what fashion the memory portion (100; 200) is to be treated by the overall memory management (44) during the memory cleanup.

3. The method according to claim 1 or 2, **characterized in that** during the memory cleanup the overall memory management (44) leaves the memory portion (100; 200) in unchanged fashion in its position in the volatile memory (50).

4. The method according to claim 1 or 2, **characterized in that** during the memory cleanup the overall memory management (44) shifts the memory portion (100; 200) as a whole in the volatile memory (50).

5. The method according to any of the claims 1 to 4, **characterized in that** the memory portion management (64; 68) of the memory portion (100; 200) is allocated to a process (62; 66) executable on the data carrier (10) and manages the memory sub-portions (110, 120, 130; 210, 220, 230) as memory resources of the process (62; 66).

6. The method according to any of the claims 1 to 5, **characterized in that** the overall memory management (44) manages the volatile memory (50) as part of a multithreading-capable virtual machine.

7. A portable data carrier (10), comprising a volatile memory (50), a processor (30) and an operating system (42) with an overall memory management facility (44) and a memory portion management facility (46, 64; 68) which is adapted to take over from the overall memory management (44) and autonomously manage a memory portion (100; 200) that is present in the volatile memory (50) as free memory and is chosen by the overall memory management facility (44),
wherein, in the autonomous management of the assigned memory portion (100; 200), the memory portion management (46; 64; 68) is adapted to manage memory sub-portions (110, 120, 130; 210, 220, 230) within the memory portion (100; 200),
**characterized in that**,
during a memory cleanup of the volatile memory (50), the overall memory management (44) is adapted to leave the memory sub-portions (110, 120, 130; 210, 220, 230) unchanged relative to the memory portion (100; 200).

8. The data carrier (10) according to claim 7, **characterized in that** the overall memory management facility (44) and the memory portion management facility (46; 64; 68) are adapted to manage the volatile memory (50) in accordance with a method according to any of the claims 1 to 6.

9. The data carrier (10) according to claim 7 or 8, **characterized in that** the data carrier (10) is configured as a chip card, secure multimedia card, USIM-, mobile communication card or USB memory medium.

## Revendications

1. Procédé dans un support de données (10) portable ayant une gestion de mémoire totale (44) dynamique d'une mémoire (50) volatile du support de données (10), la gestion de mémoire totale (44) sélectionnant une part de mémoire (100; 200) se trouvant dans la mémoire (50) volatile en tant que mémoire libre et cédant ladite part à une gestion de part de mémoire (46; 64; 68) aux fins d'une gestion autonome, la gestion de part de mémoire (46; 64; 68) gérant, lors de la gestion autonome de la part de mémoire (100; 200) cédée, des sous-parts de mémoire (110, 120, 130; 210, 220, 230) au sein de la part de mémoire (100; 200), **caractérisé en ce que** la gestion de mémoire totale (44), durant un nettoyage de mémoire de la mémoire (50) volatile, laisse inchangés les sous-parts de mémoire (110, 120, 130; 210, 220, 230) par rapport à la part de mémoire (100; 200).

2. Procédé selon la revendication 1, **caractérisé en ce que** la gestion de mémoire totale (44) pourvoit la part de mémoire (100; 200) d'un attribut de gestion qui indique de quelle manière la part de mémoire (100; 200) doit être traitée par la gestion de mémoire totale (44) durant le nettoyage de mémoire.

3. Procédé selon la revendication 1 ou 2, **caractérisé en ce que** la gestion de mémoire totale (44) laisse, durant le nettoyage de mémoire, inchangée la part de mémoire (100; 200) dans sa position dans la mémoire (50) volatile.

4. Procédé selon la revendication 1 ou 2, **caractérisé en ce que** la gestion de mémoire totale (44) déplace, durant le nettoyage de mémoire, la part de mémoire (100; 200) dans son ensemble vers la mémoire (50) volatile.

5. Procédé selon une des revendications de 1 à 4, **caractérisé en ce que** la gestion de part de mémoire (64; 68) de la part de mémoire (100; 200) est affectée à un processus exécutable sur le support de données (10) et gère les sous-parts de mémoire (110, 120, 130; 210, 220, 230) en tant que ressources de mémoire du processus (62; 66).

6. Procédé selon une des revendications de 1 à 5, **caractérisé en ce que** la gestion de mémoire totale (44) gère la mémoire (50) volatile en tant que partie d'une Machine Virtuelle Multifilières.

7. Support de données (10) portable, comprenant une mémoire (50) volatile, un processeur (30) ainsi qu'un système d'exploitation (42) ayant un dispositif de gestion de mémoire totale (44), et un
dispositif de gestion de part de mémoire (46; 64; 68) qui est configuré pour reprendre au dispositif de gestion de mémoire totale (44) une part de mémoire (100; 200) se trouvant dans la mémoire (50) volatile en tant que mémoire libre et sélectionnée par le dispositif de gestion de mémoire totale (44) et pour la gérer de façon autonome,
la gestion de part de mémoire (46; 64; 68) étant configurée pour, lors de la gestion autonome de la part de mémoire (100; 200) cédée, gérer des sous-parts de mémoire (110, 120, 130; 210, 220, 230) au sein de la part de mémoire (100; 200),
**caractérisé en ce que** la gestion de mémoire totale (44) est configurée pour, durant un nettoyage de mémoire de la mémoire (50) volatile, laisser inchangés les sous-parts de mémoire (110, 120, 130; 210, 220, 230) par rapport à la part de mémoire (100; 200).

8. Support de données (10) selon la revendication 7, **caractérisé en ce que** le dispositif de gestion de mémoire totale (44) et le dispositif de gestion de part de mémoire (46; 64; 68) sont configurés pour gérer la mémoire (50) volatile suivant un procédé selon une des revendications de 1 à 6.

9. Support de données (10) selon la revendication 7 ou 8, **caractérisé en ce que** le support de données (10) est réalisé sous forme de carte à puce, de carte multimédia sécurisée, de carte de téléphonie mobile USIM ou de support mémoire USB.
